# FASCICULE DE BREVET EUROPEEN

(11) **EP 1 108 637 B1**
(45) Date de publication et mention de la délivrance du brevet: **03.09.2003**
(21) Numéro de dépôt: 00403488.0
(22) Date de dépôt: 12.12.2000
(51) Int. Cl.: B62D 1/10, B62D 1/16

(54) **Ensemble pour haut de colonne de direction de véhicules automobiles**
Einrichtung für den oberen Teil einer Kraftfahrzeuglenksäule
Assembly for the upper part of a motor vehicle steering column

(30) Priorité: 14.12.1999 FR 9915739
(43) Date de publication de la demande: 20.06.2001
(73) Titulaire: SC2N, 78180 Montigny-le-Bretonneux (FR)
(72) Inventeur: Hallet, Michel, 14320 Clinchamps/Orne (FR)
(74) Mandataire: Texier, Christian

(56) Documents cités:
- EP-A- 0 834 426

## Description

La présente invention concerne le domaine des ensembles pour haut de colonne de direction de véhicule automobile.

On connaît de nombreux ensembles destinés à équiper le haut de colonnes de direction de véhicules automobiles. Un ensemble pour haut de colonne servant de base à la présentation en deux parties de la revendication 1 est décrit dans EP 0 834 426A.

De nos jours ces ensembles comprennent généralement des moyens de commutations électriques, pour la commande de fonctions diverses, telles que la mise en service des moyens d'éclairage et de signalisation lumineuse ou sonore, la mise en service et le réglage d'autoradio et d'ordinateurs de bord, la commande de commutation sur des boites automatisées de changement de vitesses, etc..., et des accessoires divers pour la mise en oeuvre de fonctions, tels que des ensembles de protection à base de coussin gonflable. Certains de ces moyens et/ou accessoires, tels que les moyens de commutation pour la commande des fonctions d'éclairage ou de signalisation lumineuse, sont placés ou fixés généralement sur la colonne fixe. D'autres, tels que les accessoires de protection, sont plutôt placés et fixés sur le volant lui même susceptible de rotation.

Cela conduit à des structures d'ensembles pour haut de colonne, particulièrement complexes, dont la mise en place est ainsi rendue particulièrement délicate, que ce soit pour une opération de première pose, en usine, ou lors d'opérations de maintenance ultérieures.

Cette mise en place est notamment rendue délicate en raison de la présence nécessaire dans ces ensembles, d'un contacteur rotatif électrique destiné à assurer des liaisons électriques entre la colonne de direction fixe et le volant rotatif, par exemple pour l'alimentation et la mise en oeuvre d'un coussin gonflable solidaire du volant par transmission d'un signal électrique, à partir de la colonne vers le volant, ou inversement pour la transmission d'un signal à partir du volant vers la colonne, par exemple pour la commande d'un avertisseur sonore à partir d'un interrupteur placé sur le volant.

Plus précisément encore, la plupart des contacteurs rotatifs proposés de nos jours sont formés de deux éléments de boîtier susceptibles de rotation relative, solidarisés respectivement à la colonne et au volant, et d'un ruban souple comprenant plusieurs pistes électriquement conductrices et placé entre les deux éléments précités.

Or de tels contacteurs rotatifs doivent impérativement être installés dans une position relative identifiée et précise définie entre les deux éléments de boîtier, laquelle position relative identifiée et précise doit correspondre à celle de l'arbre de direction et des roues au moment du montage. Ainsi généralement le constructeur procède à un montage en position point milieu du contacteur rotatif et des roues du véhicule. Si cette condition n'est pas respectée, le contacteur rotatif risque d'être détèrioré par rupture du ruban souple, lors de la rotation ultérieure du volant.

L'homme de l'art bien conscient de ce problème a proposé diverses solutions pour tenter d'éliminer cette difficulté. En particulier il a été proposé diverses solutions pour imposer une livraison du contacteur rotatif verrouillé dans une position identifiée « point milieu », avec déverrouillage automatique ou semi-automatique lors de la mise en place du contacteur.

Cependant en pratique, aucune des solutions jusqu'ici proposées, ne donne pleinement satisfaction.

La présente invention a maintenant pour but de proposer de nouveaux moyens conçus pour faciliter le montage des ensembles de haut de colonne de direction sur véhicule automobile.

Ce but est atteint dans le cadre de la présente invention, grâce à un ensemble pour haut de colonne de direction comprenant :
- un module destiné à être rapporté et fixé sur le haut d'une colonne de direction, comportant différents organes de commande de fonctions et/ou de mise en oeuvre de fonctions, et un moyen apte à verrouiller temporairement l'un au moins de ces organes, susceptible de rotation autour de l'axe de l'arbre de direction, dans une position angulaire déterminée, et
- des moyens aptes à verrouiller l'arbre de direction et la colonne de direction dans une position angulaire déterminée qui coïncide avec celle dudit module, avant mise en place de celui-ci, et à libérer automatiquement les moyens de verrouillage arbre/colonne, lors de la mise en place du module.

Selon un mode de réalisation préférentiel conforme à la présente invention, les moyens de verrouillage arbre/colonne comprennent un verrou susceptible de translation entre la colonne et l'arbre de direction, ledit verrou étant sollicité par un moyen élastique vers une position de verrouillage dans laquelle il est en prise avec la colonne et l'arbre de direction, pour interdire leur rotation relative, et le verrou étant adapté pour être déplacé, lors de la mise en place du module, pour libérer alors l'un au moins de la colonne et/ou de l'arbre de direction, pour autoriser ainsi leur libre rotation relative.

Selon une autre caractéristique avantageuse de la présente invention, les moyens assurant le déverrouillage du module correspondent aux moyens assurant la fixation du module sur le haut de la colonne de direction.

Ainsi le module est également déverrouillé automatiquement lors de sa mise en place sur le haut de colonne.

D'autres caractéristiques, buts et avantages de la présente invention, apparaîtront à la lecture de la description détaillée qui va suivre, et en regard des dessins annexés, donnés à titre d'exemple non limitatif, et sur lesquels :
- la figure 1 représente une vue schématique en coupe axiale longitudinale, d'un dispositif conforme à la présente invention,
- la figure 2 représente une vue partielle à échelle agrandie, selon un plan de coupe axial longitudinal, de ce dispositif, avant mise en place du module sur le haut de colonne,
- la figure 3 représente une vue similaire en coupe transversale, au niveau du verrou du haut de colonne, selon le plan de coupe III-III identifié sur la figure 2,
- la figure 4 représente une vue similaire à la figure 2, après mise en place du module,
- la figure 5 représente une vue similaire à la figure 3, après mise en place du module,
- la figure 6 représente une vue schématique en perspective d'un sous ensemble du module conforme à la présente invention, comportant des moyens de verrouillage, dans leur position verrouillée, de livraison avant montage,

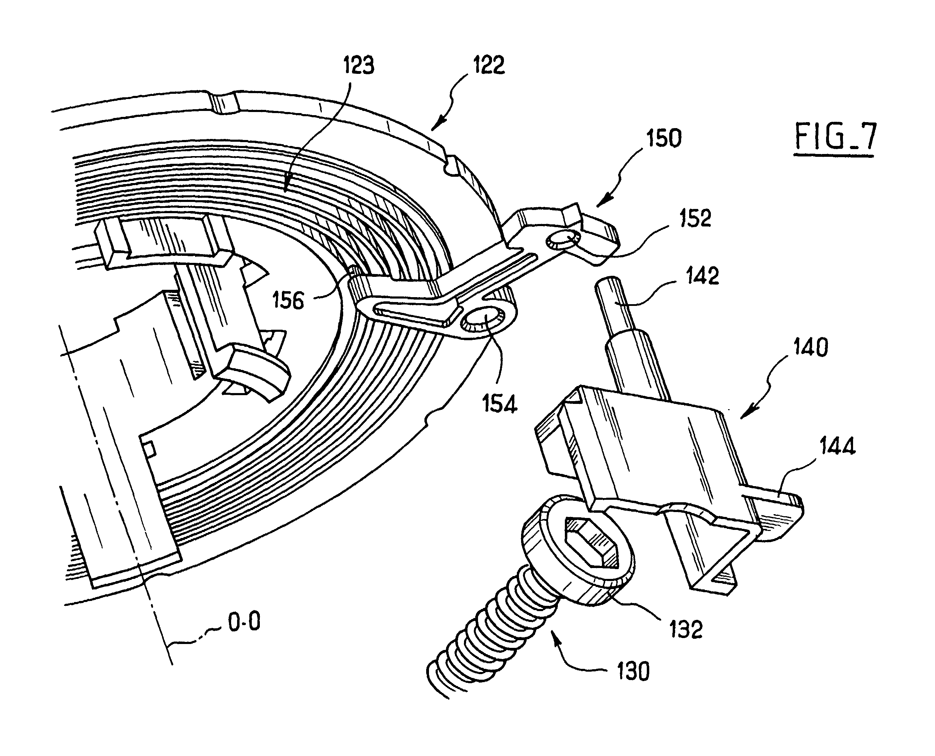

- la figure 7 représente une vue éclatée partielle des mêmes moyens, et
- la figure 8 représente une autre vue schématique en perspective dudit sous ensemble du module, en position déverrouillée, après sa mise en place sur la colonne de direction.

Sur les figures annexées, on a référencé 100 un module destiné à équiper le haut d'une colonne de direction, 200 l'arbre de direction, 300 la colonne qui l'entoure, et 400 les moyens aptes à assurer un verrouillage en rotation de l'arbre 200 par rapport à la colonne 300, avant mise en place du module 100.

Comme on l'a indiqué précédemment les moyens 400 ont pour fonction de verrouiller l'arbre de direction 200 et la colonne de direction 300 dans une position angulaire déterminée qui coïncide avec celle de livraison du module 100, avant mise en place de celui-ci, et de libérer automatiquement l'arbre 200 par rapport à la colonne 300, lors de la mise en place du module 100.

Selon le mode de réalisation préférentiel illustré sur les figures annexées, les moyens de verrouillage 400 comprennent un verrou annulaire 410 intercalé entre l'arbre 200 et la colonne 300, au voisinage de l'extrémité supérieure de celle-ci.

Le verrou 410 est susceptible de coulisser axialement, c'est à dire parallèlement à l'axe O-O de l'arbre 200.

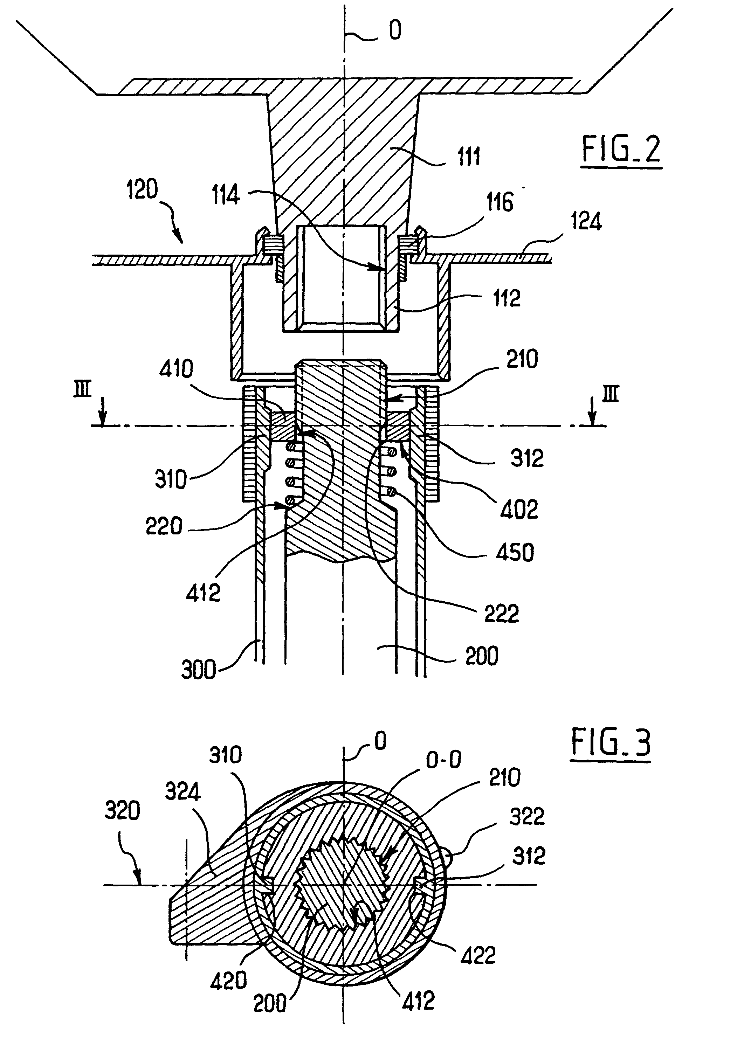

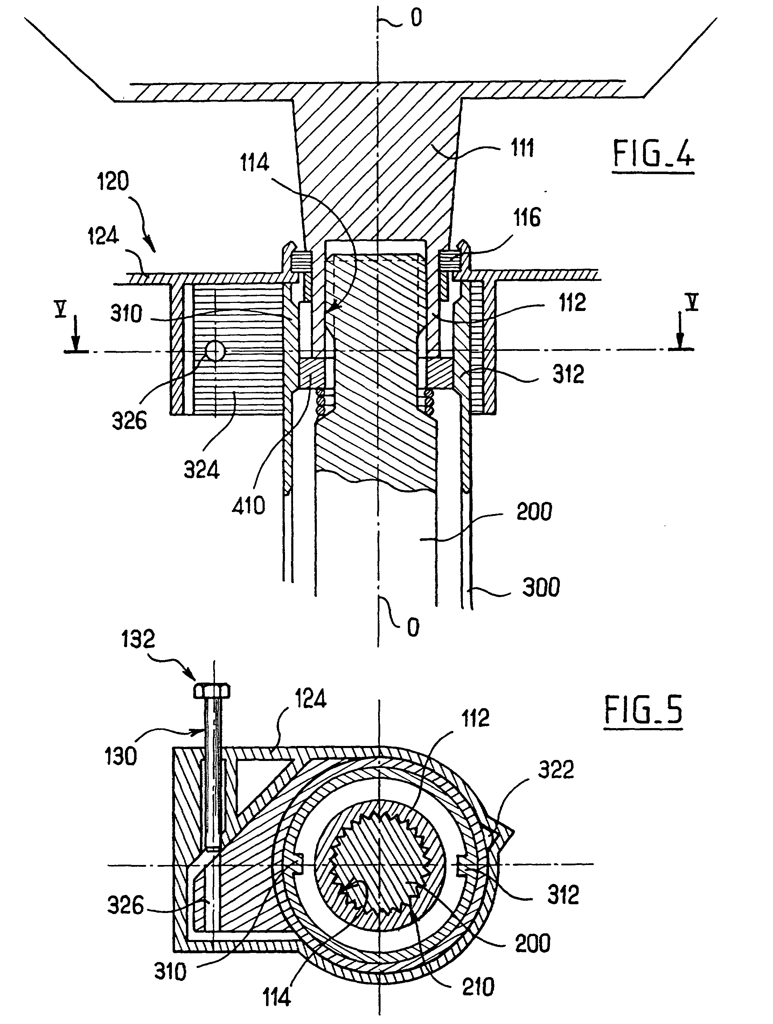

Le verrou 410 est sollicité par un ressort 450 vers une position illustrée sur les figures 2 et 3 dans laquelle le verrou 410 est en prise à la fois avec l'arbre 200 et avec la colonne 300.

A cette fin selon le mode de réalisation illustré sur les figures annexées, l'arbre 200, est muni sur une partie de sa longueur, au niveau de son extrémité supérieure, de cannelures ou stries longitudinales 210, réparties sur sa périphérie, et le verrou 410 est muni, sur sa périphérie interne, de stries complémentaires 412.

Par ailleurs la colonne 300 est munie sur sa périphérie interne de deux ergots en saillie 310, 312 diamétralement opposés et le verrou 410 est muni sur sa périphérie externe de deux gorges complémentaires 420, 422.

Bien entendu les stries 210/412 et les ergots 310, 312 et gorges 420, 422 peuvent être remplacés par tous moyens équivalents. Ainsi par exemple on peut remplacer les stries 210/412 par une série d'ergots et de gorges complémentaires répartis autour de l'axe de rotation de l'arbre 200 respectivement sur la surface externe de celui-ci et sur la surface interne du verrou 400, tandis que les deux ergots 310, 312 et gorges 420, 422 peuvent être remplacés par un nombre différents de moyens similaires ou encore par des stries complémentaires.

Selon le mode de réalisation illustré sur les figures annexées, le ressort 450 est placé entre un décrochement 220 formé sur l'arbre 200 et dirigé vers l'extrémité libre de l'arbre 200 et une face 402 du verrou 400 orthogonale à l'axe O-O et dirigée vers le bas de la colonne 300. Plus précisément encore le ressort 450 est placé entre deux décrochements 220, 222 de l'arbre 200 pour limiter l'élongation du ressort 450 et par conséquent le déplacement du verrou 400.

La position de repos du verrou 410, en position de livraison, est définie par le ressort 450, lorsque celui-ci vient en appui sur le décrochement 222. Dans cette position, la face 402 précitée du verrou 410 coïncide avec le plan du décrochement 222.

Par ailleurs, le module et/ou le volant 110 qui lui est lié (il s'agit du volant 110 selon le mode de réalisation illustré sur les figures annexées) comprend une jupe 112 adaptée pour pénétrer dans l'espace défini entre l'arbre 200 et la colonne 300 afin de pousser le verrou 410 à l'encontre de la sollicitation du ressort 450, lors de la mise en place du module 100.

On notera que la jupe 112 précitée comporte de préférence, sur sa surface interne, des stries longitudinales 114 complémentaires des stries 210 prévues sur l'arbre 200.

Plus précisément encore, la longueur de la jupe est adaptée de telle sorte qu'après mise en place du module 100 sur le haut de la colonne, le verrou 410 échappe aux stries 210 de l'arbre 200 et/ou aux ergots 310, 312 de la colonne 300 afin de libérer à la rotation l'arbre 200.

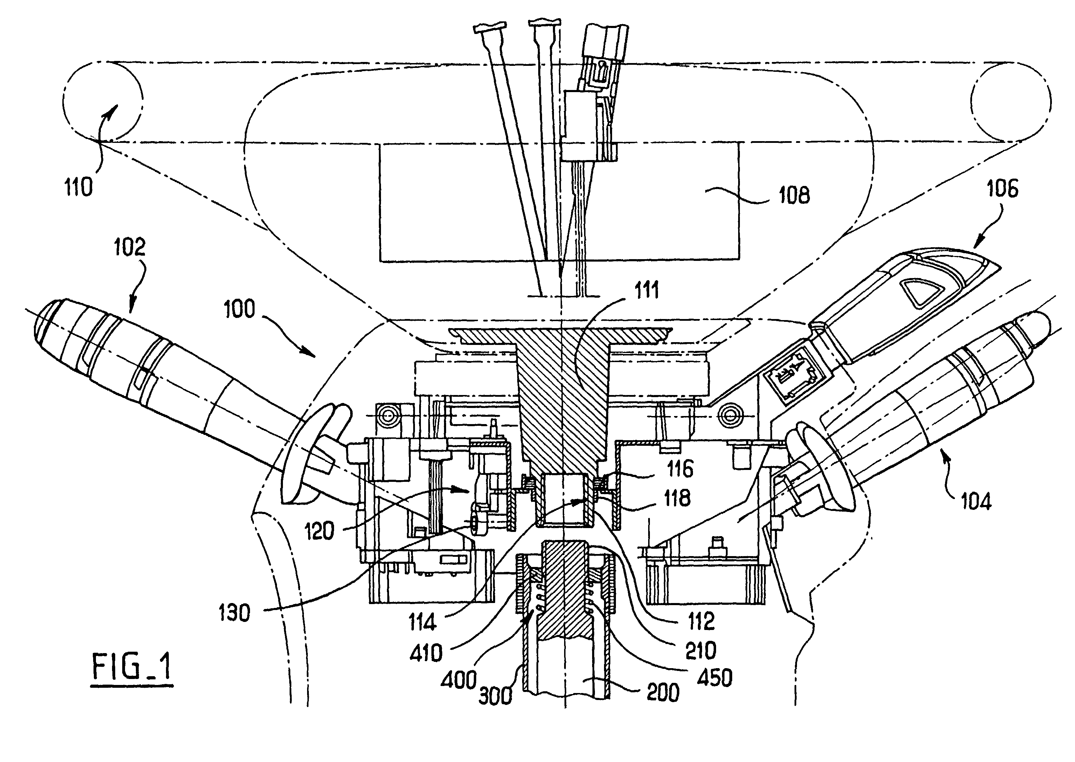

Selon le mode de réalisation illustré sur les figures 1 à 5 annexées, il est ainsi prévu de libérer le verrou 410 par rapport aux stries 210 de l'arbre 200.

Cependant, selon une variante de réalisation préférentielle de l'invention, les positions longitudinales des ergots 310, 312 et des stries 210 sont adaptées de telle sorte qu'au contraire lors du déplacement du verrou 410, sous l'effet de la sollicitation de la jupe 112, le verrou 410 soit libéré par rapport aux ergots 310, 312.

Ainsi, le verrou 410 reste lié au volant 110 et à l'arbre 200. Et l'on évite ainsi toute friction entre les couples d'éléments ressort 450/verrrou 410 ou verrou 410/volant 110.

Bien entendu, l'invention n'est pas limitée aux moyens de réalisation particuliers illustrés sur les figures annexées pour définir la liaison entre le moyeu du volant 110 et l'arbre 200.

Selon le mode de réalisation illustré sur les figures annexées, le volant 110 est pourvu d'une structure femelle constituée de la jupe 112 apte à entourer l'extrémité striée de l'arbre 200. Ainsi en variante on peut prévoir au contraire sur le moyeu du volant 110, un axe mâle strié longitudinalement apte à pénétrer dans un alésage strié complémentaire formé sur l'extrémité de l'arbre 200.

Le module 100, et en particulier le moyen de verrouillage prévu sur celui-ci pour immobiliser le module 100 dans une position angulaire prédéterminée, à la livraison, peuvent l'objet de nombreuses variantes de réalisation.

Selon une variante préférentielle de l'invention, ces moyens de verrouillage sont conformes à ceux définis dans la demande de brevet FR 99 07670 déposée le 17 juin 1999.

En l'espèce de tels moyens de verrouillage sont placés sur un contacteur électrique rotatif 120.

Ce contacteur électrique tournant 120 comprend deux ensembles de boîtier 122, 124 susceptibles de rotation relative autour de l'axe O-O et un élément conducteur électrique souple, classique en soi (non représenté sur les figures annexées) disposé entre les deux ensembles 122, 124.

L'un 122 de ces deux ensembles de boîtier est adapté pour être lié à rotation avec le moyeu du volant 110. Pour cela, il est prévu des structures dissymétriques de révolution et complémentaires à la fois sur le moyeu du volant 110 et sur ledit élément 122, ou encore un élément lié à rotation avec ce dernier.

L'autre ensemble de boîtier 124 est au contraire prévu pour être lié à l'extrémité supérieure de la colonne 300.

Le contacteur rotatif 120 comprend en outre des moyens 130 de fixation de l'ensemble de boîtier 124 sur le site d'utilisation et des moyens 140 formant cache aptes à interdire l'accès aux moyens de fixation 130 tant que le contacteur n'est pas placé dans une position contrôlée prédéterminée retenue pour la livraison, laquelle position contrôlée prédéterminée coïncide, comme on l'a évoqué précédemment, avec la position verrouillée de livraison de l'arbre 200 par rapport à la colonne 300.

Plus précisément encore, dans le cadre du mode de réalisation préférentiel conforme à la présente invention, les moyens 140 formant cache comprennent un masque sollicité vers une position de recouvrement du moyen de fixation 130, et le masque 140 comprend au moins un élément de verrouillage 142 conçu pour venir en appui avec un moyen formant écran 150 lié à l'élément de boîtier 122, tant que le contacteur n'est pas dans ladite position contrôlée prédéterminée. Ainsi, l'écran 140 interdit tout déplacement du masque 140 en dehors de sa position de recouvrement tant que le contacteur n'est pas placé dans ladite position contrôlée prédéterminée.

Cependant, l'élément de verrouillage 142 prévu sur le masque 140 est escamotable dans les moyens formant écran 150, dans un alésage 152 de celui-ci, lorsque le contacteur électrique est au contraire dans une position contrôlée prédéterminée de livraison, pour libérer alors le masque 140 et autoriser un déplacement de celui-ci en dehors de sa position de recouvrement.

Le moyen de fixation 130 comprend de préférence au moins une vis disposée transversalement à l'axe de rotation O-O du contacteur.

Le masque 140 est avantageusement guidé à déplacement parallèlement à l'axe de rotation O-O du contacteur.

Comme on le voit sur les figures annexées, de préférence, le masque 140 comporte une patte 144 de manoeuvre manuelle qui s'étend transversalement à l'axe de rotation O-O.

L'écran 150 est avantageusement formé d'un index ou palette guidé à déplacement sur l'ensemble de boîtier 124. Plus précisément encore, de préférence, l'écran 150 est monté à rotation sur l'ensemble de boîtier 124, par l'intermédiaire de structures 154, autour d'un axe parallèle à l'axe de l'alésage 152 recevant le doigt de verrouillage 142, et l'écran 150 comporte par ailleurs un pion 156 conçu pour être engagé dans une gorge spiralée 123 de l'ensemble de boîtier 122. Ainsi, l'écran 150 est monté à pivotement sur l'ensemble 124 autour d'un axe excentré par rapport au pion 156 engagé dans la gorge spiralée 123.

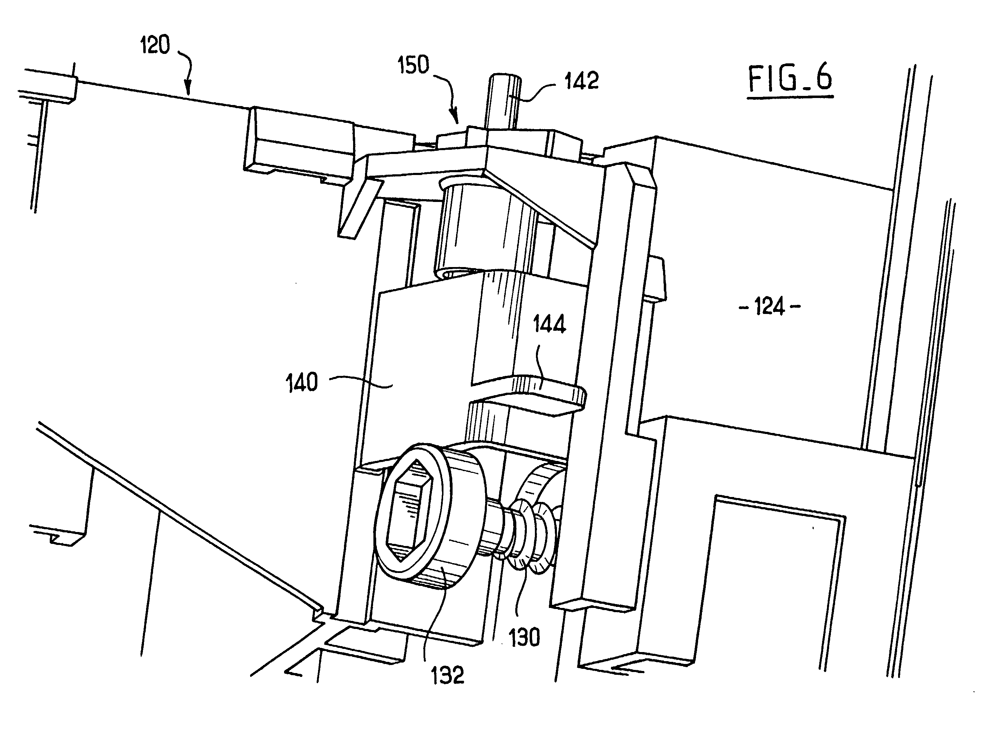

Comme on le voit sur la figure 6, lorsque la vis 130 est placée en saillie, sa tête 132 est placée en regard du masque 140 et interdit ainsi le déplacement du masque 140 vers la position dite de recouvrement.

Cette position correspond à celle de livraison dans laquelle le doigt de verrouillage 142 est placé dans l'alésage 152 de l'écran 150 pour interdire tout déplacement relatif à rotation entre les deux ensembles 122, 124.

De préférence, cette position correspond à une position point milieu du contacteur électrique rotatif.

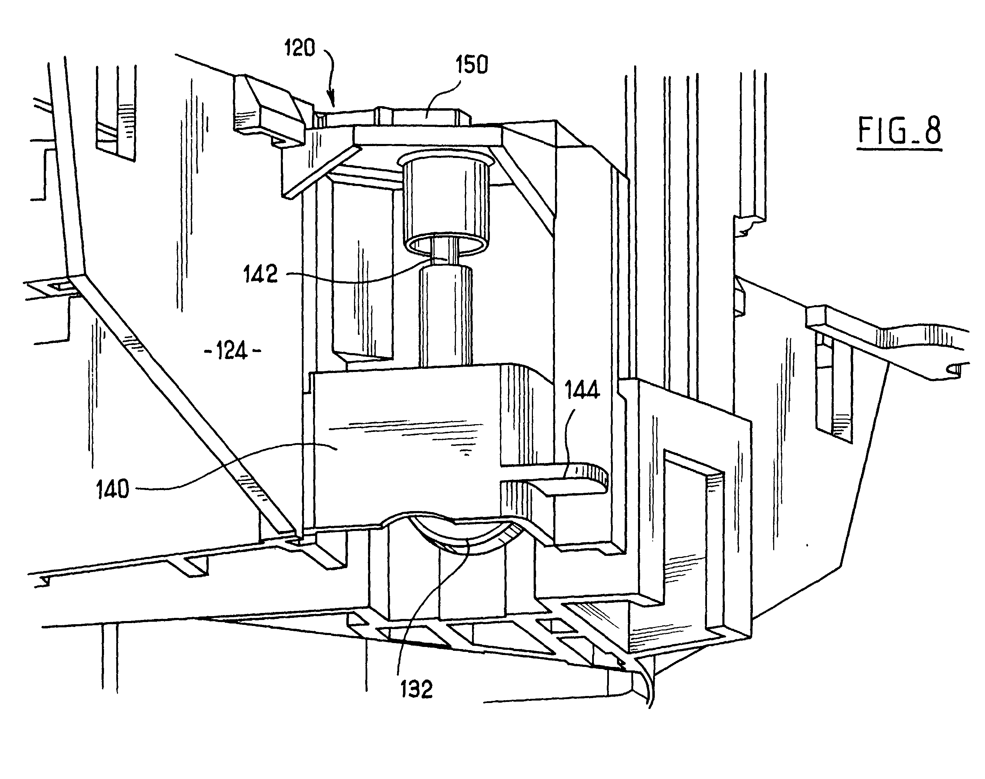

En revanche, lorsque la vis 132 est vissée, elle libère le masque 140 qui lui-même libère l'écran 150 pour autoriser une libre rotation entre les deux ensembles de boîtier 122, 124, comme illustré sur la figure 8.

On pourra se référer utilement au descriptif complet donné dans la demande de brevet antérieure FR 99 07670 du 17 juin 1999 pour bien comprendre le détail de la structure et du fonctionnement du contacteur électrique rotatif ainsi formé, et en particulier de ces moyens de verrouillage.

Les moyens de réception de la vis de fixation 130, prévus sur la colonne 300 peut faire l'objet de diverses variantes de réalisation.

Selon la variante schématisée sur les figures 3 et 5, les moyens 320 prévus sur l'extrémité de la colonne 300 pour immobiliser l'élément 124 de contacteur comprennent, d'une part un ergot 322 en saillie sur la surface extérieure de la colonne 300 pour assurer un indexage angulaire entre la colonne 300 et l'ensemble de boîtier 124, et d'autre part un berceau ou console 324 sensiblement diamétralement opposé par rapport à l'ergot 322 et possédant un alésage 326 globalement transversal à l'axe O-O et adapté pour recevoir la vis 130.

Dans le cadre de la présente invention, le module 100 se présente sous la forme d'un ensemble unitaire qui regroupe sous forme d'une prestation complète l'ensemble des moyens de commande, notamment les moyens de commutation électrique référencés 102, 104, 106 pour assurer la commande de mise en service des moyens d'éclairage et de signalisation lumineux ou sonores, la mise en service et le réglage d'autoradios et d'ordinateurs de bord, etc..., le volant 110 et le module de coussin gonflant de sécurité 108.

Par ailleurs de préférence dans le cadre de l'invention, le module unitaire 100 constituant une prestation complète incorpore également les coquilles d'habillage du module.

Ainsi, la présente invention offre de nombreux avantages par rapport à la technique antérieure.

Elle permet aux constructeurs automobiles de simplifier ces approvisionnements et références, puisqu'elle regroupe sous forme d'un module unitaire un grand nombre de moyens de commande.

Par ailleurs, comme on le précisera par la suite, la livraison d'un module complet unitaire 100 permet de garantir la mise en place, notamment du contacteur rotatif 120 dans une position compatible avec celle de l'arbre 200 par rapport à la colonne 300.

Le moyeu 111 du volant, comportant la jupe 112 précitée, est relié au corps de volant 110 proprement dit par tout moyen approprié. Ainsi, le moyeu 111 peut être surmoulé sur le corps de volant 110, ou inversement, emmanché à force, moulé de manière monobloc avec le corps de volant, etc...

Dans les structures classiques, le volant 110 est guidé à rotation autour de l'axe O-O à l'aide d'un roulement solidaire de la colonne 300.

Au contraire, dans le cadre de l'invention, de préférence le volant 110 est guidé à rotation autour de l'axe O-O à l'aide d'un roulement 116 intercalé sur le moyeu 111 entre le volant 110 et le support des commandes 102, 104, 106.

Le roulement 116 est ainsi immobilisé de préférence entre un décrochement prévu sur le moyeu 111 et un écrou 118 rajouté sur ce moyeu 111. Ainsi, l'écrou 118 permet d'effectuer l'assemblage du volant 110 sur le module 100.

Le cas échéant, on peut prévoir sur le moyeu 111 des stries 114 dissymétriques de révolution, complémentaires des stries homologues 210 prévus sur l'extrémité de l'arbre 200, afin d'imposer une position unique de montage entre le module 100 et l'arbre 200.

L'homme de l'art comprendra à la lecture de la description qui précède que la présente invention permet de livrer l'arbre 200 verrouillant en rotation par rapport à la colonne 300 à l'aide du verrou 410. De même, le module 100 est livré dans une position angulaire prédéterminée identique à celle de l'arbre 200 et verrouillée à l'aide de la chaîne de moyens composés par la vis 130, le masque 140 et l'écran 150.

Les positions verrouillées tant de l'arbre 200 par rapport à la colonne 300 que du module 100 correspondent de préférence à des positions point milieu, c'est-à-dire roues droites parallèles à l'axe longitudinal du véhicule.

Lors du montage du module 100 sur la colonne 300, l'arbre 200 est automatiquement déverrouillé, le verrou 410 étant repoussé par la jupe 112.

Le module 100 quant à lui reste verrouillé tant que la vis de fixation 130 n'est pas vissée sur la console 320.

Par ailleurs, pour démonter le module aux deux colonnes 100, il est nécessaire de placer le volant 110 et le contacteur rotatif 120 en position de contrôle prédéterminé, qui coïncide de préférence à la position point milieu, pour placer l'alésage 152 de l'écran 150 en regard du doigt de verrouillage 142 afin de pouvoir déplacer le masque 140 en dehors de la position de recouvrement et accéder ainsi à la vis de fixation 130 pour dévisser celle-ci.

Lors du retrait du module 100, par translation parallèlement à l'axe O-O, l'arbre 200 est automatiquement reverrouillé dans la position prédéterminée initiale grâce au verrou 410 qui interfère à nouveau avec les stries 210 de l'arbre 200 et les ergots 310, 312 de la colonne 300.

Ainsi, il apparaît que la structure proposée dans le cadre de la présente invention impose un montage et un démontage du module 100 dans une position unique prédéterminée qui coïncide de préférence à la position point milieu. Cette disposition interdit par conséquent tout risque de déphasage angulaire entre le module 100, particulièrement le contacteur électrique rotatif 120 et l'arbre 200, que ce soit lors d'une première monte en usine, lors d'une retouche en usine, ou encore lors d'une intervention ultérieure après vente, pour une maintenance.

## Revendications

1. Ensemble pour haut de colonne de direction de véhicules automobiles, **caractérisé par le fait qu'**il comprend :
- un module (100) destiné à être rapporté et fixé sur le haut d'une colonne de direction (300), comportant différents organes (102, 104, 106, 108, 120) de commande de fonction et/ou de mise en oeuvre de fonction, et un moyen (130, 140, 150) apte à verrouiller temporairement l'un au moins de ces organes (120), susceptible de rotation autour de l'axe (O-O) de l'arbre de direction (200), dans une position angulaire déterminée, et
- des moyens (410) aptes à verrouiller l'arbre de direction (200) et la colonne de direction (300) dans une position angulaire déterminée qui coïncide avec celle dudit module (100), avant mise en place de celui-ci, et à libérer automatiquement les moyens de verrouillage (410) de l'arbre (200) par rapport à la colonne (300) lors de la mise en place du module (100).

2. Ensemble selon la revendication 1, **caractérisé par le fait que** les moyens de verrouillage (410), arbre (200)/colonne (300) comprennent un verrou (410) susceptible de translation entre la colonne (300) et l'arbre de direction (200), ledit verrou (410) étant sollicité par un moyen élastique (450) vers une position de verrouillage dans laquelle il est en prise avec la colonne (300) et l'arbre de direction (200), pour interdire leur rotation relative, le verrou (410) étant adapté pour être déplacé, lors de la mise en place du module (100), pour libérer alors l'un au moins de la colonne (300) et/ou de l'arbre de direction (200) pour autoriser ainsi leur libre rotation relative.

3. Ensemble selon l'une des revendications 1 ou 2, **caractérisé par le fait que** les moyens (130) assurant le déverrouillage du module (100) correspondent aux moyens (130) assurant la fixation du module (100) sur le haut de la colonne de direction (300).

4. Ensemble selon l'une des revendications 1 à 3, **caractérisé par le fait que** le module (100) comprend les organes de commande et de mise en oeuvre (102, 104, 106, 108, 120) assemblés sous forme d'un ensemble unitaire avec le volant (110).

5. Ensemble selon la revendication 4, **caractérisé par le fait que** le module (100) comporte en outre les coquilles d'habillage du module, dans l'ensemble unitaire.

6. Ensemble selon l'une des revendications 1 à 5, **caractérisé par le fait que** les moyens de verrouillage (410), arbre (200)/colonne (300) comprennent un verrou (410) libérés par rapport à la colonne (300) lors de la mise en place du module (100).

7. Ensemble selon l'une des revendications 1 à 6, **caractérisé par le fait qu'**il comprend dans le module (100) un contacteur électrique tournant (120) comprenant deux ensembles de boîtier (122, 124) susceptibles de rotation relative, un élément conducteur électrique souple disposé entre les deux ensembles (122, 124), des moyens (130) de fixation de l'un des ensembles de boîtier (124) sur le haut de colonne et des moyens (140) formant cache aptes à interdire l'accès aux moyens de fixation (130), tant que le contacteur n'est pas placé dans une position contrôlée prédéterminée, dans lequel les moyens formant cache (140) comprennent un masque sollicité vers une position de recouvrement du moyen de fixation (130), lequel masque (140) comprend au moins un élément de verrouillage (142) conçu pour venir en appui sur un moyen formant écran (150) lié à un ensemble de boîtier (124), tant que le contacteur n'est pas dans ladite position contrôlée prédéterminée pour interdire un déplacement du masque (140) en dehors de sa position de recouvrement, ledit élément de verrouillage (142) étant escamotable dans les moyens formant écran (150) lorsque le contacteur est au contraire dans une position contrôlée prédéterminée pour libérer le masque (140) et autoriser alors un déplacement de celui-ci en dehors de sa position de recouvrement.

8. Ensemble selon la revendication 7, **caractérisé par le fait que** le moyen de fixation comprend au moins une vis (130) disposée transversalement à l'axe de rotation (O-O) du contacteur.

9. Ensemble selon l'une des revendications 7 ou 8, **caractérisé par le fait que** l'élément de verrouillage (142) est formé d'un doigt de verrouillage apte à pénétrer dans un perçage (152) du moyen formant écran (150) lorsque le contacteur (120) est placé dans la position contrôlée prédéterminée.

10. Ensemble selon l'une des revendications 7 à 9, **caractérisé par le fait que** l'écran (150) est formé d'un index ou palette guidé à déplacement sur l'ensemble de boîtier (124), l'index ou palette (150) possédant par ailleurs un pion (156) engagé dans une gorge spiralée (123) de l'ensemble de boîtier (122).

11. Ensemble selon l'une des revendications 1 à 10, **caractérisé par le fait que** le module (100) comprend un volant (110) équipé d'un moyeu (111) muni de moyens aptes à être reliés avec liaison d'entraînement à rotation sur l'extrémité de l'arbre (200).

12. Ensemble selon l'une des revendications 1 à 11, **caractérisé par le fait que** le module (100) comprend un roulement à bille (116) intercalé entre un moyeu (111) du volant et un support de commande.

## Patentansprüche

1. Einrichtung für den oberen Teil einer Kraftfahrzeuglenksäule, **dadurch gekennzeichnet, daß** sie folgendes umfaßt:
- ein Modul (100), das dafür bestimmt ist, auf dem oberen Teil einer Lenksäule (300) aufgesetzt und befestigt zu werden und das verschiedene Elemente (102, 104, 106, 108, 120) zur Bedienung von Funktionen und/oder zur Aktivierung von Funktionen, sowie ein Mittel (130, 140, 150), das dazu geeignet ist, wenigstens eines der um die Achse (O-O) der Lenkwelle (200) drehbaren Elemente (120) vorübergehend in einer bestimmten Winkelposition zu verriegeln, umfaßt, und
- Mittel (410), die dazu geeignet sind, die Lenkwelle (200) und die Lenksäule (300) in einer bestimmten Winkelposition, die mit derjenigen des Moduls (100) übereinstimmt, vor der Montage des Moduls zu verriegeln und die Mittel zur Verriegelung (410) der Lenkwelle (200) gegenüber der Lenksäule (300) bei der Montage des Moduls (100) automatisch freizugeben.

2. Einrichtung nach Anspruch 1, **dadurch gekennzeichnet, daß** die Mittel zur Verriegelung (410) der Lenkwelle (200)/Lenksäule(300) ein Verriegelungselement (410) umfassen, das zwischen der Lenksäule (300) und der Lenkwelle (200) verschiebbar ist, wobei das Verriegelungselement (410) durch ein elastisches Mittel (450) in eine Verriegelungsposition gebracht wird, in der es im Eingriff mit der Lenksäule (300) und der Lenkwelle (200) ist, um deren Verdrehung gegeneinander zu verhindern, wobei das Verriegelungselement (410) dazu geeignet ist, bei der Montage des Moduls (100) verschoben zu werden, um dabei wenigstens eines der Teile Lenksäule (300) und/oder Lenkwelle (200) freizugeben und so deren freie gegenseitige Verdrehung zu ermöglichen.

3. Einrichtung nach einem der Ansprüche 1 oder 2, **dadurch gekennzeichnet, daß** die Mittel (130) zur Entriegelung des Moduls (100) und die Mittel (130) zur Fixierung des Moduls (100) auf dem Oberteil der Lenksäule (300) übereinstimmen.

4. Einrichtung nach einem der Ansprüche 1 bis 3, **dadurch gekennzeichnet, daß** das Modul (100) Elemente zur Bedienung und zur Betätigung (102, 104, 106, 108, 120) umfaßt, die in Form einer einheitlichen Baugruppe mit dem Lenkrad (110) zusammengebaut sind.

5. Einrichtung nach Anspruch 4, **dadurch gekennzeichnet, daß** das Modul (100) außerdem die Verkleidungsschalen des Moduls in der einheitlichen Baugruppe aufweist.

6. Einrichtung nach einem der Ansprüche 1 bis 5, **dadurch gekennzeichnet, daß** die Mittel zur Verriegelung (410) von Lenkwelle (200)/Lenksäule(300) ein Verriegelungselement (410) umfassen, das bei der Montage des Moduls (100) gegenüber der Lenksäule (300) freigegeben wird.

7. Einrichtung nach einem der Ansprüche 1 bis 6, **dadurch gekennzeichnet, daß** das Modul (100) ein drehbares elektrisches Verbindungselement (120) umfaßt, das zwei gegeneinander verdrehbare Gehäuseeinheiten (122, 124), ein zwischen den beiden Einheiten (122, 124) angebrachtes, biegsames, elektrisch leitendes Element, Mittel (130) zur Fixierung einer der Gehäuseeinheiten (124) auf dem oberen Teil der Lenksäule und Mittel (140), die eine Abdeckung bilden, die geeignet ist, den Zugriff auf die Mittel zur Fixierung (130) zu verhindern, solange das elektrische Verbindungselement nicht in einer vorbestimmten, kontrollierten Position plaziert ist, umfaßt, wobei die die Abdeckung bildenden Mittel (140) eine Maske umfassen, die in eine Position zur Abdeckung des Mittels zur Fixierung (130) gebracht wird, wobei die Maske (140) wenigstens ein Verriegelungselement (142) umfaßt, das dafür konzipiert ist, auf einem eine Blende bildenden und mit einer Gehäuseeinheit (124) verbundenen Mittel (150) zur Abstützung zu kommen, solange das elektrische Verbindungselement nicht in der vorbestimmten, kontrollierten Position ist, um eine Verschiebung der Maske (140) aus ihrer Position zur Abdeckung zu verhindern, wobei das Verriegelungselement (142) in den die Blende bildenden Mitteln (150) versenkbar ist, wenn das elektrische Verbindungselement im Gegensatz dazu in einer kontrollierten, vorbestimmten Position ist, um die Maske (140) freizugeben und damit deren Verschiebung aus deren Position zur Abdeckung zu erlauben.

8. Einrichtung nach Anspruch 7, **dadurch gekennzeichnet, daß** das Mittel zur Fixierung wenigstens eine quer zur Rotationsachse (O-O) des elektrischen Verbindungselements angeordnete Schraube (130) umfaßt.

9. Einrichtung nach einem der Ansprüche 7 oder 8, **dadurch gekennzeichnet, daß** das Verriegelungselement (142) durch einen Verriegelungsstift gebildet wird, der dazu geeignet ist, in eine Aussparung (152) des die Blende bildenden Mittels (150) einzutauchen, wenn das elektrische Verbindungselement (120) in der vorbestimmten kontrollierten Position plaziert wird.

10. Einrichtung nach einem der Ansprüche 7 bis 9, **dadurch gekennzeichnet, daß** die Blende (150) durch einen Zeiger oder eine Platte mit einer auf der Gehäuseeinheit (124) geführten Bewegung gebildet wird, wobei der Zeiger oder die Platte (150) außerdem einen Stift (156) besitzt, der in einer spiralförmigen Rille (123) der Gehäuseeinheit (122) läuft.

11. Einrichtung nach einem der Ansprüche 1 bis 10, **dadurch gekennzeichnet, daß** das Modul (100) ein Lenkrad (110) umfaßt, das mit einer Nabe (111) ausgestattet ist, die mit Mitteln ausgestattet ist, die geeignet sind, mit einer Verbindung zum Antrieb der Drehung auf dem Ende der Lenkwelle (200) verbunden zu werden.

12. Einrichtung nach einem der Ansprüche 1 bis 11, **dadurch gekennzeichnet, daß** das Modul (100) ein Kugellager (116) umfaßt, das zwischen einer Nabe (111) des Lenkrads und einem Bedienungsträger angeordnet ist.

## Claims

1. Assembly for the upper part of a motor-vehicle steering column, **characterized in that** it comprises:
- a module (100) intended to be mounted and fixed on the upper part of a steering column (300), including various members (102, 104, 106, 108, 120) for controlling functions and/or for putting functions into operation, and a means (130, 140, 150) which is suitable for temporarily locking at least one of these members (120), which is capable of rotation about the axis (O-O) of the steering shaft (200), in a defined angular position, and
- means (410) suitable for locking the steering shaft (200) and the steering column (300) in a defined angular position, which coincides with that of the said module (100), before the latter is put in place, and for automatically releasing the means (410) for locking the shaft (200) relative to the column (300) while the the module (100) is being put in place.

2. Assembly according to Claim 1, **characterized in that** the means (410) for locking the shaft (200) and the column (300) comprise a latch (410) capable of translation between the column (300) and the steering shaft (200), the said latch (410) being loaded by an elastic means (450) towards a locking position, in which it is in engagement with the column (300) and the steering shaft (200) so as to prevent their relative rotation, the latch (410) being designed to be displaced, while the module (100) is being put in place, to then release one at least of the column (300) and/or the steering shaft (200) so as to allow in this way their free relative rotation.

3. Assembly according to either of Claims 1 and 2, **characterized in that** the means (130) ensuring the unlocking of the module (100) correspond to the means (130) ensuring the fixing of the module (100) on the upper part of the steering column (300).

4. Assembly according to one of Claims 1 to 3, **characterized in that** the module (100) comprises control and operating members (102, 104, 106, 108, 120) assembled in the form of a unitary assembly with the steering wheel (110).

5. Assembly according to Claim 4, **characterized in that** the module (100) furthermore includes the covering shells of the module in the unitary assembly.

6. Assembly according to one of Claims 1 to 5, **characterized in that** the means (410) for locking the shaft (200) and the column (300) comprise a latch (410) released from the column (300) while the module (100) is being put in place.

7. Assembly according to one of Claims 1 to 6, **characterized in that** it comprises in the module (1) a rotary electrical contactor (120) comprising two housing assemblies (122, 124) capable of relative rotation, a flexible electrical conductor element arranged between the two assemblies (122, 124), means (130) for fixing one of the housing assemblies (124) on the upper part of the column and means (140) forming a guard suitable for preventing access to the fixing means (130) unless the contactor is placed in a predetermined controlled position, in which the means forming a guard (140) comprise a mask loaded towards a position in which it covers the fixing means (130), the said mask (140) comprises at least one locking element (142) designed to come to bear on a means forming a screen (150) linked to a housing assembly (124) unless the contactor is in the said predetermined controlled position so as to prevent displacement of the mask (140) out of its covering position, the said locking element (142) being retractable into the means forming the screen (150) when the contactor is, on the contrary, in a predetermined controlled position to release the mask (140) and then allow displacement of the latter out of its covering position.

8. Assembly according to Claim 7, **characterized in that** the fixing means comprises at least one screw (130) arranged transversely to the axis of rotation (O-O) of the contactor.

9. Assembly according to either of Claims 7 and .8, **characterized in that** the locking element (142) is formed by a locking finger capable of penetrating into a hole (152) in the means forming the screen (150) when the contactor (120) is placed in a predetermined controlled position.

10. Assembly according to one of Claims 7 to 9, **characterized in that** the screen (150) is formed by a tongue or arm guided displaceably on the housing assembly (124)., the tongue or arm (150) furthermore having a pin (156) engaged in a spiral groove (123) of the housing assembly (122).

11. Assembly according to one of Claims 1 to 10, **characterized in that** the module (100) comprises a steering wheel (110) equipped with a hub (111) provided with means suitable for connection, with a rotary driving joint, to the end of the shaft (200).

12. Assembly according to one of Claims 1 to 11, **characterized in that** the module (100) comprises a ball bearing (116) interposed between a hub (111) of the steering wheel and a control support.
